# EUROPEAN PATENT APPLICATION

(11) **EP 4 503 399 A1**
(43) Date of publication of application: **05.02.2025**
(21) Application number: 23780045.3
(22) Date of filing: 23.03.2023
(51) Int. Cl.: H02K 7/116, H02K 21/00

(54) **GENERATOR**

(30) Priority: 30.03.2022 JP 2022056779
(71) Applicant: Yamauchi Corporation, Hirakata-shi, Osaka 573-1132 (JP)
(72) Inventor: HAYASHI, Takayoshi, Hirakata-shi, Osaka 573-1132 (JP)
(74) Representative: Müller Hoffmann & Partner
(86) International application number: PCT/JP2023/011510
(87) International publication number: WO 2023/190034

(57) **Abstract**

A generator 100 includes a coil 22, a first shaft 24 and a second shaft 26 that extend in a direction perpendicular to an axial direction of the coil 22 so as to pass through inside of the coil 22, a magnet 28 and a first gear 30 that are provided in an outer periphery portion of the first shaft 24 in the coil 22, and a second gear 32 provided in an outer periphery portion of the second shaft 26 in the coil 22. The second gear 32 has more teeth than the first gear 30, and is engaged with the first gear 30. The second shaft 26 is rotationally driven by a driving unit 18. The rotation of the second shaft 26 is accelerated by the second gear 32 and the first gear 30, and is transmitted to the first shaft 24 and the magnet 28.

## Description

### TECHNICAL FIELD

The present invention relates to a generator.

### BACKGROUND ART

Conventionally, various generators that can convert kinetic energy into electric energy have been proposed. For example, Patent Document 1 discloses a rotating magnet-type generator device that includes an air core coil, a rotating shaft penetrating and extending through the winding portion of the air core coil, and a magnet fixed to the rotating shaft so as to be arranged in the air core coil.

In the generator disclosed in Patent Document 1, by rotating the rotating shaft, the magnet is rotated in the air core coil and an induced current flows through the air core coil. That is, power generation is performed.

The above-described generator is used in a remote controller installed in, for example, a toilet room, a bathroom, a kitchen, and the like. Specifically, the generator is incorporated into the remote controller so that when an operation element of the remote controller is operated, the rotating shaft is rotated to perform power generation. In such a remote controller, the electric power generated by the generator through a user's operation of the operation element can be used to transmit a signal to an apparatus to be operated.

### LIST OF PRIOR ART DOCUMENTS

### PATENT DOCUMENT

Patent Document 1: JP6647672B

### SUMMARY OF INVENTION

### TECHNICAL PROBLEM

In the generator as described above, in order to secure a sufficient amount of power generation, it is necessary to rotate the rotating shaft (magnet) at a sufficient speed. Therefore, for example, when incorporating the generator in the remote controller, it is conceivable to provide a speed increaser between the operation element and the rotating shaft. Specifically, the rotation speed of the rotating shaft can be improved by providing, between the operation element and the rotating shaft, a speed increaser in which a plurality of gears are combined.

However, when sufficient space cannot be secured in the remote controller due to design constraints and the like, it may not be possible to arrange a sufficient number of gears between the operation element and the rotating shaft. In this case, the rotating shaft cannot be rotated at a sufficient speed, and the power generation efficiency is decreased.

Therefore, an object of the present invention is to provide a generator capable of efficiently generating power in a space-saving manner.

### SOLUTION TO PROBLEM

The gist of the present invention is the following generator.
(1) A generator including
   a coil wound in a cylindrical shape,
   a first shaft and a second shaft that extend in a direction perpendicular to an axial direction of the coil so as to pass through inside of the coil, that are provided parallel to each other when viewed from the axial direction, and that are rotatable with respect to the coil,
   a magnet and a first gear inside the coil that are provided in an outer periphery portion of the first shaft to be integrally rotated with the first shaft, and that are arranged to be aligned in a length direction of the first shaft,
   a second gear inside the cylindrical portion that has more teeth than the first gear, that is provided in an outer periphery portion of the second shaft to be integrally rotated with the second shaft, and that is engaged with the first gear, and
   a driving unit that is provided outside the coil when viewed from the axial direction of the coil, and that rotationally drives the second shaft.
(2) The generator according to the above-described (1),
   wherein the second shaft is made of a non-magnetic material.
(3) The generator according to the above-described (1) or (2), further including
   a housing that accommodates the coil, the first shaft, the second shaft, and the driving unit,
   wherein the driving unit includes
   an operation member that is provided such that a part thereof protrudes to outside of the housing, and the part is provided to be able to perform a reciprocating linear motion in a first direction along which the part is pushed into the housing, and a second direction along which the part is pushed to outside of the housing,
   a biasing member that biases the operation member toward the second direction,
   a conversion unit that converts a linear motion of the operation member in the first direction into a first rotational motion, and converts a linear motion of the operation member in the second direction into a second rotational motion in an opposite direction to the first rotational motion, and
   a transmission unit that transmits the first rotational motion converted by the conversion unit to the second shaft, and blocks transmission of the second rotational motion converted by the conversion unit to the second shaft.
(4) The generator according to the above-described (3),
   wherein the operation member includes a rack gear,
   the conversion unit includes a pinion gear that is engaged with the rack gear, and a drive gear that has more teeth than the pinion gear and is integrally rotated with the pinion gear,
   the transmission unit includes a driven gear that is coaxially provided with the second shaft and is engaged with the drive gear, and a ratchet portion that connects the driven gear to the second shaft, and
   the ratchet portion transmits the first rotational motion transmitted to the driven gear from the drive gear to the second shaft, and blocks transmission of the second rotational motion transmitted to the driven gear from the drive gear to the second shaft.
(5) The generator according to any of the above-described (1) to (4), further including
   a bobbin including a hollow cylindrical portion,
   wherein the coil is wound around an outer peripheral surface of the cylindrical portion,
   the first shaft and the second shaft are provided to penetrate the cylindrical portion when viewed from the axial direction of the coil, and
   the magnet, the first gear, and the second gear are provided inside the cylindrical portion.
(6) The generator according to the above-described (5),
   wherein the coil includes a first coil and a second coil that are arranged to be aligned in an axial direction of the cylindrical portion,
   the bobbin includes a first bobbin around which the first coil is wound, and a second bobbin around which the second coil is wound,
   the first shaft and the second shaft are provided to be sandwiched by the first bobbin and the second bobbin, and
   the magnet is formed into a ring shape so that the first shaft passes through a center portion thereof, and an outer periphery portion thereof is magnetized into two poles in a circumference direction.
(7) The generator according to the above-described (5) or (6), further including
   a magnetic metal member fixed to an end portion of the bobbin in the axial direction of the cylindrical portion.
(8) The generator according to any of the above-described (1) to (7),
   wherein a part of the magnet is overlapped with a part of the second gear when viewed from a length direction of the second shaft.

### ADVANTAGEOUS EFFECTS OF INVENTION

According to the present invention, a generator capable of efficiently generating power in a space-saving manner can be obtained.

### BRIEF DESCRIPTION OF DRAWINGS

[Figure 1] Figure 1 is a perspective view illustrating the external appearance of a generator according to an embodiment of the present invention.
[Figure 2] Figure 2 is a schematic view illustrating the internal structure of the generator.
[Figure 3] Figure 3 is a schematic cross-sectional view illustrating an a-a portion in Figure 2.
[Figure 4] Figure 4 is a schematic cross-sectional view illustrating a b-b portion in Figure 2.
[Figure 5] Figure 5 is a schematic perspective view illustrating a bobbin and a second shaft.
[Figure 6] Figure 6 is a schematic perspective view illustrating a first shaft, the second shaft, and a second bobbin.
[Figure 7] Figure 7 is a diagram illustrating an operation member.
[Figure 8] Figure 8 is a diagram for describing the operation of the generator.
[Figure 9] Figure 9 is a diagram for describing the operation of the generator.

### DESCRIPTION OF EMBODIMENTS

Hereinafter, a generator according to an embodiment of the present invention will be described with reference to the drawings.

### (Configuration of Generator)

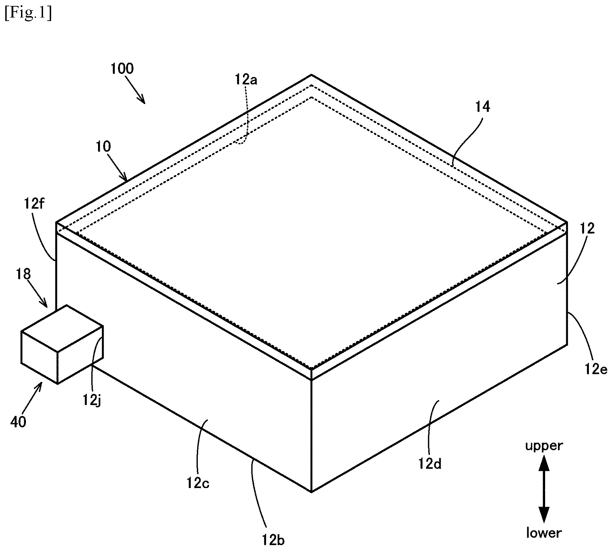

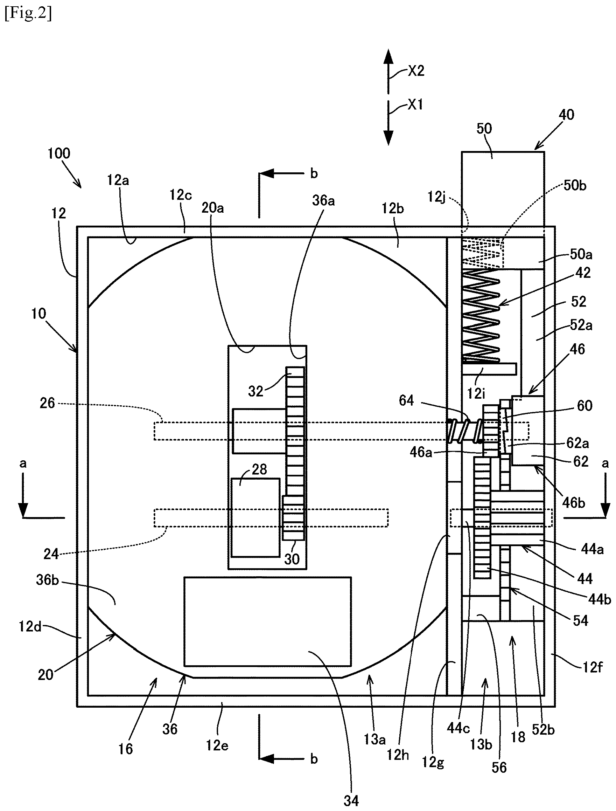

Figure 1 is a perspective view illustrating the external appearance of a generator according to an embodiment of the present invention, and Figure 2 is a schematic view illustrating an internal structure of the generator according to the present embodiment. Note that Figure 2 illustrates a generator 100 in a state where a lid portion 14, which will be described later, is removed.

As illustrated in Figure 1, the generator 100 according to the present embodiment includes a rectangular parallelepiped-shaped housing 10. As illustrated in Figure 1 and Figure 2, the housing 10 includes a container 12 having an opening 12a, and a lid portion 14 detachably attached to the container 12 so as to close the opening 12a. As illustrated in Figure 2, a power generation unit 16 and a driving unit 18 are accommodated in the container 12.

As illustrated in Figure 1 and Figure 2, in the present embodiment, the container 12 has a rectangular parallelepiped shape, and includes a rectangular bottom portion 12b, and wall portions 12c, 12d, 12e, and 12f that rise from the four sides of the bottom portion 12b. Note that, in the following, in order to facilitate understanding of the structure of the generator 100, let the lid portion 14 side with respect to the bottom portion 12b be an upper side, and let the bottom portion 12b side with respect to the lid portion 14 be a lower side.

As illustrated in Figure 2, in the container 12, a plate-like partition 12g is provided so as to rise upward from the bottom portion 12b. When viewed from above, the partition 12g extends parallel to the wall portions 12d and 12f so as to connect the wall portion 12c and the wall portion 12e to each other. **In** the partition 12g, a supporting portion 12h is provided to rise upward from the partition 12g at a position on the wall portion 12e side with respect to a center portion.

**In** the present embodiment, the inside of the container 12 is divided by the partition 12g into a first container 13a and a second container 13b, the power generation unit 16 is accommodated in the first container 13a, and the driving unit 18 is accommodated in the second container 13b. **In** the second container 13b, a plate-like supporting portion 12i is provided so as to rise upward from the bottom portion 12b. The supporting portion 12i is provided to extend parallel to the wall portions 12c and 12e from the partition 12g toward the wall portion 12f side. Note that a gap for arranging an operation member 40, which will be described later, is formed between the supporting portion 12i and the wall portion 12f. Additionally, a through-hole 12j for passing the operation member 40 is formed in the wall portion 12c.

**In** the present embodiment, the housing 10 is made of a non-magnetic material. A non-magnetic material in this specification means a material that is not a ferromagnetic material, and includes a paramagnetic material, an antimagnetic material, and an antiferromagnetic material. **In** the present embodiment, the housing 10 is formed of, for example, a synthetic resin.

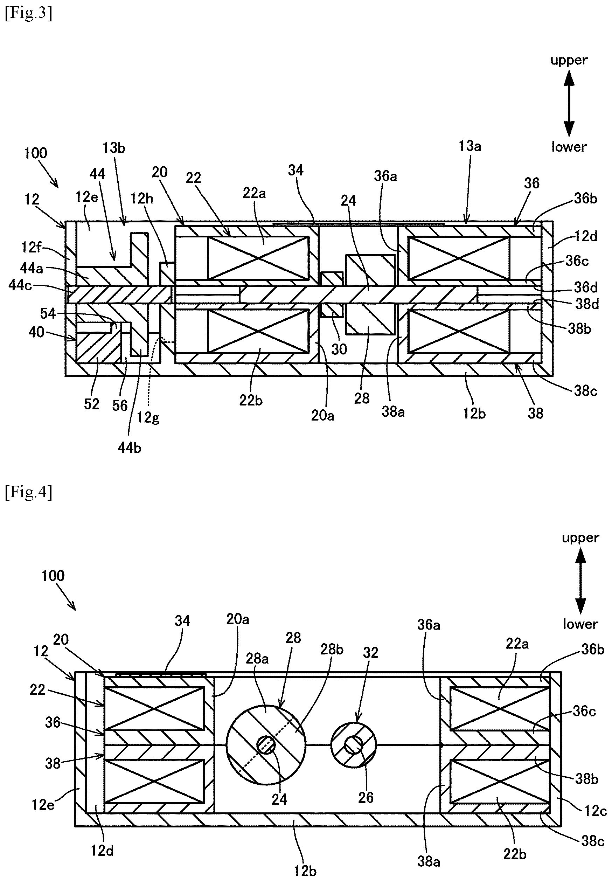

Figure 3 is a schematic cross-sectional view illustrating an a-a portion in Figure 2, and Figure 4 is a schematic cross-sectional view illustrating a b-b portion in Figure 2. As illustrated in Figure 2 to Figure 4, the power generation unit 16 includes a bobbin 20, a coil 22, a first shaft 24, a second shaft 26, a magnet 28, a first gear 30, a second gear 32, and a magnetic metal member 34. The bobbin 20, the second shaft 26, the first gear 30, and the second gear 32 are made of, for example, a non-magnetic material. It is preferable to use a soft magnetic material for the first shaft 24, from the viewpoint of providing a function as a back yoke of the magnet 28. Specifically, materials, such as an iron material, an SUS (stainless steel) material, an SKH (high-speed steel) material, and a ferrite material, can be used for the first shaft 24.

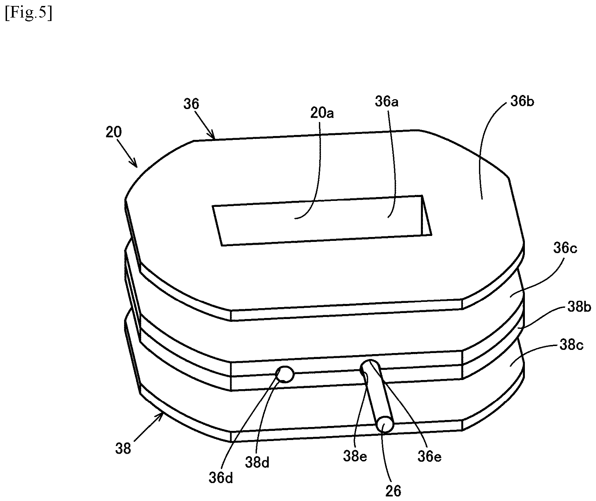

Figure 5 is a schematic perspective view illustrating the bobbin 20 and the second shaft 26. As illustrated in Figure 2 to Figure 5, the bobbin 20 includes a hollow cylindrical portion 20a in a center portion. As illustrated in Figure 2 to Figure 4, in the present embodiment, the bobbin 20 is fixed to the container 12. As illustrated in Figure 3 and Figure 4, the coil 22 is wound in a cylindrical manner. **In** the present embodiment, the coil 22 is wound around an outer peripheral surface of the cylindrical portion 20a of the bobbin 20. As illustrated in Figure 3 to Figure 5, in the present embodiment, the bobbin 20 includes a first bobbin 36 and a second bobbin 38. Additionally, as illustrated in Figure 3 and Figure 4, the coil 22 includes a first coil 22a and a second coil 22b.

**In** the present embodiment, the first bobbin 36 includes a hollow cylindrical portion 36a, and flange portions 36b and 36c provided at both end portions of the cylindrical portion 36a. The second bobbin 38 includes a hollow cylindrical portion 38a, and flange portions 38b and 38c provided at both end portions of the cylindrical portion 38a. The flange portion 36c and the flange portion 38b are fixed such that the cylindrical portion 36a of the first bobbin 36 and the cylindrical portion 38a of the second bobbin 38 are aligned in a straight line. **In** the present embodiment, the cylindrical portion 20a is constituted by the cylindrical portion 36a and the cylindrical portion 38a.

The first coil 22a and the second coil 22b are arranged to be aligned in the axial direction of the cylindrical portion 20a. **In** the present embodiment, the first coil 22a is wound around the cylindrical portion 36a of the first bobbin 36, and the second coil 22b is wound around the cylindrical portion 38a of the second bobbin 38. Although illustration is omitted, each of the first coil 22a and the second coil 22b is electrically connected to an external apparatus via, for example, a rectifier or the like. Accordingly, the external apparatus can be activated by using the current generated in the first coil 22a and the second coil 22b.

As illustrated in Figure 2, the first shaft 24 and the second shaft 26 are supported by the bobbin 20 so as to be rotatable with respect to the bobbin 20 and the coil 22. The first shaft 24 and the second shaft 26 extend in a direction perpendicular to the axial direction of the coil 22 (the cylindrical portion 20a) so as to pass through the inside of the coil 22 (the cylindrical portion 20a), and are provided parallel to each other when viewed from the axial direction of the coil 22 (the cylindrical portion 20a). In the present embodiment, the first shaft 24 and the second shaft 26 are provided to penetrate the cylindrical portion 20a when viewed from the axial direction of the coil 22 (the cylindrical portion 20a). Note that, in the present embodiment, the first shaft 24 does not penetrate the coil 22, when viewed from the axial direction of the coil 22 (the cylindrical portion 20a). In other words, when viewed from the axial direction of the coil 22 (the cylindrical portion 20a), the both ends of the first shaft 24 are located inside the outer circumference of the coil 22. In the present embodiment, the first shaft 24 is shorter than the second shaft 26.

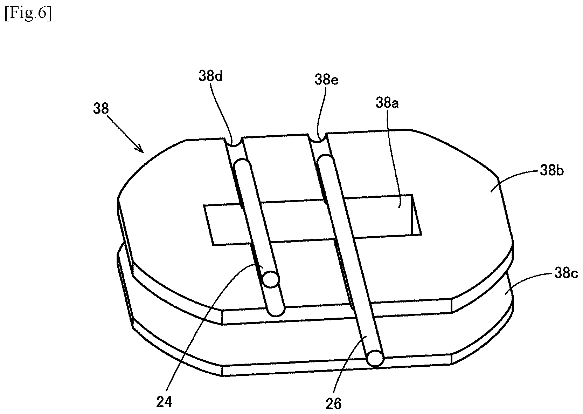

Figure 6 is a schematic perspective view illustrating the first shaft 24, the second shaft 26, and the second bobbin 38. Note that, as will be described later, although the magnet 28 and the first gear 30 are attached to the first shaft 24, and the second gear 32 is attached to the second shaft 26, in Figure 6, in order to facilitate understanding of the relationship among the first shaft 24, the second shaft 26, and the second bobbin 38, illustration of the magnet 28, the first gear 30, and the second gear 32 is omitted.

As illustrated in Figure 6, concave portions 38d and 38e for rotatably supporting the first shaft 24 and the second shaft 26 are formed in the flange portion 38b of the second bobbin 38. Additionally, as illustrated in Figure 5, in the flange portion 36c of the first bobbin 36, a concave portion 36d is formed in an area facing the concave portion 38d, and a concave portion 36e is formed in an area facing the concave portion 38e. As illustrated in Figure 3, in the present embodiment, the first shaft 24 is rotatably supported by the concave portion 36d and the concave portion 38d. Additionally, as illustrated in Figure 5, the second shaft 26 is rotatably supported by the concave portion 36e and the concave portion 38e.

As illustrated in Figure 2 and Figure 3, the magnet 28 and the first gear 30 are arranged inside the coil 22 and the cylindrical portion 20a to be aligned in the length direction of the first shaft 24. In the present embodiment, the magnet 28 and the first gear 30 are fixed to the first shaft 24 so as to be integrally rotated with the first shaft 24.

As illustrated in Figure 3 and Figure 4, in the present embodiment, the magnet 28 is a permanent magnet formed into a ring shape such that the first shaft 24 passes through the center portion. As illustrated in Figure 4, in the present embodiment, the magnet 28 has a configuration in which an outer periphery portion is magnetized into two poles in the circumference direction, and includes a first polarity portion 28a and a second polarity portion 28b that have different polarities. Note that, in Figure 4, the border between the first polarity portion 28a and the second polarity portion 28b in the magnet 28 is illustrated by a broken line. Although the material of the magnet 28 is not particularly limited, for example, an Nd-Fe-B sintered magnet can be used.

As illustrated in Figure 2, the second gear 32 is fixed to the second shaft 26 inside the coil 22 and the cylindrical portion 20a, so as to be integrally rotated with the second shaft 26, and to be engaged with the first gear 30. The number of teeth of the second gear 32 is larger than the number of teeth of the first gear 30. Accordingly, the rotation of the second shaft 26 is accelerated by the second gear 32 and the first gear 30, and is transmitted to the first shaft 24. **In** the present embodiment, the magnet 28 and the second gear 32 are arranged such that a part of the magnet 28 is overlapped with a part of the second gear 32, when viewed from the length direction (the axis direction) of the second shaft 26.

The magnetic metal member 34 is fixed to an end portion of the bobbin 20 in the axial direction of the cylindrical portion 20a. In the present embodiment, the magnetic metal member 34 is fixed to the flange portion 36b of the first bobbin 36 so as to be located radially outward of the magnet 28, when viewed from the axial direction of the cylindrical portion 20a. For example, a metal plate or a metallic foil is used as the magnetic metal member 34.

The polarity of the magnetic metal member 34 changes according to the polarity of a portion of the magnet 28 near the magnetic metal member 34. For example, when the first polarity portion 28a of the magnet 28 is closer to the magnetic metal member 34 than the second polarity portion 28b, a portion of the magnetic metal member 34 close to the magnet 28 will have the polarity opposite to that of the first polarity portion 28a. Accordingly, when the first shaft 24 is not rotationally driven, the magnetic force acting between the magnet 28 and the magnetic metal member 34 can prevent the magnet 28 from being rotated. As a result, rattling of the generator 100 can be prevented.

It is preferable to use a soft magnetic material for the magnetic metal member 34, from the viewpoint of ease of switching the polarity. Specifically, materials, such as an iron material, an SUS (stainless steel) material, an SKH (high-speed steel) material, and a ferrite material, can be used for the magnetic metal member 34.

The driving unit 18 is provided outside of the coil 22 when viewed from the axial direction of the coil 22, and rotationally drives the second shaft 26 when operated by a user of the generator 100. As described above, in the present embodiment, the driving unit 18 is provided in the second container 13b of the container 12.

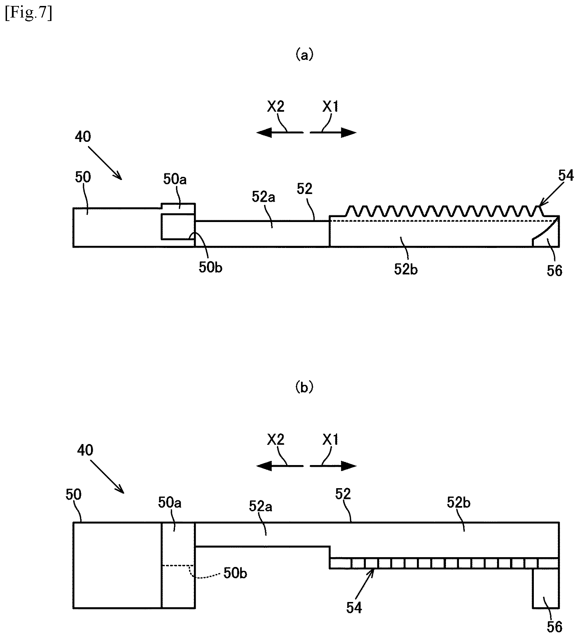

The driving unit 18 includes an operation member 40, a biasing member 42, a conversion unit 44, and a transmission unit 46. Figure 7 is a diagram illustrating the operation member 40, (a) is a side view of the operation member 40 (a diagram of the operation member 40 viewed from the left side of the paper of Figure 2), and (b) is a plan view of the operation member 40.

As illustrated in Figure 2 and Figure 7, the operation member 40 includes an operation portion 50, a sliding portion 52, a rack gear 54, and a guide portion 56. As illustrated in Figure 2, a part (the operation portion 50 in the present embodiment) of the operation member 40 is provided so as to protrude to the outside of the housing 10. Additionally, the operation member 40 is provided to be able to perform a reciprocating linear motion in a first direction X1 and a second direction X2. Note that the first direction X1 means the movement direction of the operation portion 50 at the time of pushing the operation portion 50 into the housing 10, and the second direction X2 means the movement direction of the operation portion 50 at the time of pushing the operation portion 50 to the outside of the housing 10.

As illustrated in Figure 2 and Figure 7, in the present embodiment, the operation portion 50 has a substantially rectangular parallelepiped shape, and is inserted into the through-hole 12j of the wall portion 12c so as to be movable in the first direction X1 and the second direction X2. A protruding portion 50a and a concave portion 50b are formed in the operation portion 50 inside the housing 10.

The protruding portion 50a is formed to be positioned above the through-hole 12j. The operation member 40 is prevented from falling out from the housing 10, since the protruding portion 50a is locked by the wall portion 12c. The concave portion 50b is formed to be opened toward the partition 12g side and the supporting portion 12i side. An end portion of the biasing member 42 is inserted into the concave portion 50b. The biasing member 42 will be described later.

The sliding portion 52 is formed to extend in the first direction X1 from the operation portion 50. In the present embodiment, the sliding portion 52 slides in the first direction X1 or the second direction X2 with respect to the housing 10, in conjunction with the movement of the operation portion 50 in the first direction X1 or the second direction X2. In the present embodiment, the sliding portion 52 includes a first sliding portion 52a extending toward the wall portion 12e side through between the wall portion 12f and the supporting portions 12i from the operation portion 50, and a second sliding portion 52b that is provided at a position on the wall portion 12e side with respect to the first sliding portion 52a, and has a width larger than the first sliding portion 52a.

The rack gear 54 is formed on an upper surface of the second sliding portion 52b. In the present embodiment, the rack gear 54 is formed to extend parallel to the first direction X1 in an end portion of the second sliding portion 52b on the partition 12g side. The guide portion 56 is formed to protrude toward the partition 12g side from the end portion of the second sliding portion 52b on the wall portion 12e side.

In the present embodiment, since the operation portion 50 is sandwiched by the wall portion 12f and the partition 12g, and the second sliding portion 52b and the guide portion 56 are sandwiched by the wall portion 12f and the partition 12g, the movement direction of the operation member 40 is regulated to the first direction X1 and the second direction X2.

As illustrated in Figure 2, the biasing member 42 is provided to be sandwiched by the operation portion 50 (the concave portion 50b) and the supporting portion 12i. The biasing member 42 biases the operation member 40 toward the second direction X2. In the present embodiment, the coil spring is used as the biasing member 42.

As illustrated in Figure 2 and Figure 3, the conversion unit 44 includes a pinion gear 44a that is engaged with the rack gear 54, and a drive gear 44b that has more teeth than the pinion gear 44a and is integrally rotated with the pinion gear 44a. The pinion gear 44a is provided above the rack gear 54. In the present embodiment, the pinion gear 44a and the drive gear 44b are fixed to a third shaft 44c, and the third shaft 44c is rotatably supported by the wall portion 12f and the supporting portion 12h. Note that, in the present embodiment, although the pinion gear 44a and the drive gear 44b are integrally molded, the pinion gear 44a and the drive gear 44b may be configured as separate members, as long as the pinion gear 44a and the drive gear 44b are integrally rotated with the third shaft 44c as the rotating shaft.

As illustrated in Figure 2, the transmission unit 46 includes a driven gear 46a that is engaged with the drive gear 44b, and a ratchet portion 46b that connects the driven gear 46a to the second shaft 26. The driven gear 46a is coaxially provided with the second shaft 26. Additionally, the driven gear 46a is supported by the second shaft 26, so as to be movable in the length direction of the second shaft 26 and to be rotatable with respect to the second shaft 26.

The ratchet portion 46b includes first ratchet teeth 60, a connection member 62, and a biasing member 64. The first ratchet teeth 60 are formed into an annular shape, and are coaxially provided with the second shaft 26. In the present embodiment, the first ratchet teeth 60 is integrally molded with the driven gear 46a on the wall portion 12f side of the driven gear 46a. Similar to the driven gear 46a, the first ratchet teeth 60 are supported by the second shaft 26 so as to be movable in the length direction of the second shaft 26 and to be rotatable with respect to the second shaft 26.

The connection member 62 is formed into a cylindrical shape, and is coaxially provided with the second shaft 26 on the wall portion 12f side with respect to the first ratchet teeth 60. The connection member 62 includes second ratchet teeth 62a that are engaged with the first ratchet teeth 60. The connection member 62 is connected to the second shaft 26 so as to be integrally rotated with the second shaft 26.

As will be described later, in the present embodiment, in a case where the driven gear 46a and the first ratchet teeth 60 are rotated clockwise when viewed from the power generation unit 16 side, the first ratchet teeth 60 and the second ratchet teeth 62a are engaged with each other. Accordingly, the connection member 62 and the second shaft 26 are rotated in conjunction with the driven gear 46a.

On the other hand, in a case where the driven gear 46a and the first ratchet teeth 60 are rotated counterclockwise when viewed from the power generation unit 16 side, the first ratchet teeth 60 and the second ratchet teeth 62a are not engaged with each other. In this case, even if the driven gear 46a and the first ratchet teeth 60 are rotated, the connection member 62 and the second shaft 26 are not rotated.

The biasing member 64 is provided between the bobbin 20 and the driven gear 46a, and biases the driven gear 46a toward the connection member 62 side. In the present embodiment, the coil spring as the biasing member 64 is fitted to the second shaft 26. In the present embodiment, one end of the biasing member 64 is supported by the flange portions 36c and 38b of the bobbin 20, and the other end of the biasing member 64 is supported by the driven gear 46a.

### (Operation of Generator)

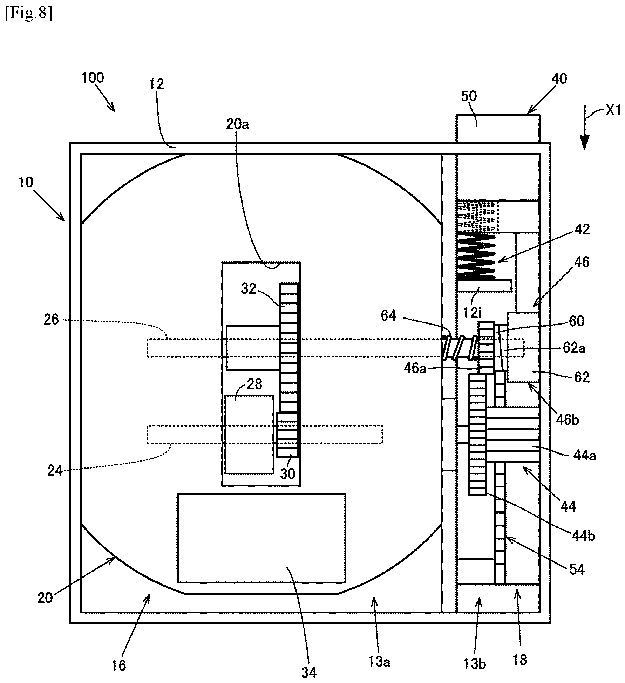

In the present embodiment, as illustrated in Figure 8, when the user of the generator 100 pushes the operation portion 50 into the housing 10, the operation member 40 performs a linear motion in the first direction X1. The linear motion of the operation member 40 in the first direction X1 is transmitted to the conversion unit 44 (the pinion gear 44a) via the rack gear 54. Accordingly, the conversion unit 44 (the pinion gear 44a) is rotated counterclockwise (a first rotational motion), when viewed from the power generation unit 16 side (the left side of the paper of Figure 2).

When the above-described first rotational motion is transmitted to the driven gear 46a from the conversion unit 44 (the drive gear 44b), the driven gear 46a is rotated clockwise, when viewed from the power generation unit 16 side. As described above, the above-described clockwise rotation of the driven gear 46a is transmitted to the second shaft 26 via the first ratchet teeth 60 and the connection member 62 (the second ratchet teeth 62a). Accordingly, the second shaft 26 is rotated.

The rotation of the second shaft 26 is accelerated by the second gear 32 and the first gear 30, and is transmitted to the first shaft 24. Accordingly, the magnet 28 is rotated. **In** this manner, in the present embodiment, the magnet 28 can be rotated by pushing the operation portion 50 into the housing 10. As a result, a current is generated in the coil 22. That is, power generation is performed.

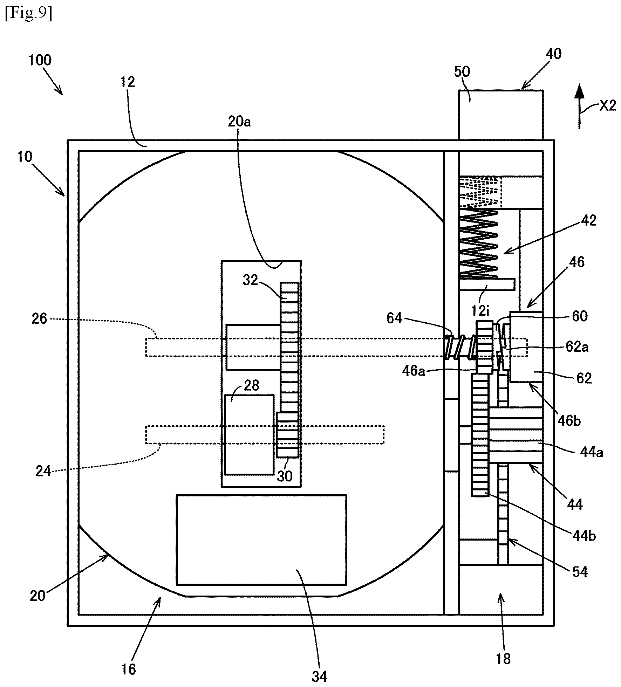

As described above, since the operation member 40 is pushed in the second direction X2 by the biasing member 42, when the user of the generator 100 pushes the operation portion 50 into the housing 10, and thereafter releases his/her hand from the operation portion 50, the operation member 40 performs a linear motion in the second direction X2 as illustrated in Figure 9. The linear motion of the operation member 40 in the second direction X2 is transmitted to the conversion unit 44 (the pinion gear 44a) via the rack gear 54. Accordingly, the conversion unit 44 (the pinion gear 44a) is rotated clockwise (a second rotational motion), when viewed from the power generation unit 16 side (the left side of the paper of Figure 2).

When the above-described second rotational motion is transmitted to the driven gear 46a from the conversion unit 44 (the drive gear 44b), the driven gear 46a is rotated counterclockwise, when viewed from the power generation unit 16 side. As described above, the above-described counterclockwise rotation of the driven gear 46a is not transmitted to the second shaft 26. **In** the present embodiment, when the driven gear 46a is rotated counterclockwise as described above, the first ratchet teeth 60 are moved in the length direction of the second shaft 26 along the second ratchet teeth 62a, without being engaged with the second ratchet teeth 62a. At this time, the driven gear 46a is moved in the length direction of the second shaft 26, while maintaining a state where the driven gear 46a is engaged with the drive gear 44b. Therefore, although the driven gear 46a is rotated counterclockwise by the rotation transmitted from the drive gear 44b when viewed from the power generation unit 16 side, this rotation is not transmitted to the connection member 62. **In** this case, since the second shaft 26 is not rotated, the rotation is not transmitted to the magnet 28 from the second shaft 26 via the second gear 32, the first gear 30, and the first shaft 24. Accordingly, the magnet 28 is not rotated, and power generation is not performed. Note that, since the driven gear 46a is pushed toward the connection member 62 side by the biasing member 64, when a force is not applied to the operation member 40 from the outside, a state is maintained where the first ratchet teeth 60 and the second ratchet teeth 62a are engaged with each other as illustrated in Figure 2.

### (Effects of Present Embodiment)

As described above, in the generator 100 according to the present embodiment, the first shaft 24 and the second shaft 26 are provided so as to pass through the inside of the coil 22 (cylindrical portion 20a), and to extend in the direction perpendicular to the axial direction of the coil 22 (the cylindrical portion 20a), the magnet 28 and the first gear 30 are provided to the first shaft 24, and the second gear 32 is provided to the second shaft 26. The second shaft 26 is rotationally driven by the driving unit 18. The rotation of the second shaft 26 is accelerated by the second gear 32 and the first gear 30, and is transmitted to the first shaft 24. Accordingly, since the magnet 28 can be rotated at high speed, power generation can be efficiently performed.

Additionally, in the present embodiment, an acceleration mechanism (the first gear 30 and the second gear 32) for rotating the magnet 28 at high speed is provided in the cylindrical portion 20a of the bobbin 20. That is, in the present embodiment, the acceleration mechanism is arranged by utilizing the space in the coil 22 (the cylindrical portion 20a). In this case, compared with a case where a similar acceleration mechanism is provided outside the coil 22 (the bobbin 20), the generator 100 can be configured smaller. That is, the generator 100 according to the present embodiment can efficiently generate power in a space-saving manner.

Note that, in the present embodiment, the magnet 28 and the second gear 32 are arranged such that a part of the magnet 28 is overlapped with a part of second gear 32, when viewed from the length direction of the second shaft 26. In this case, it is possible to increase the dimensions of the magnet 28 and the second gear 32, while suppressing the distance between the first shaft 24 and the second shaft 26 from increasing. Accordingly, it is possible to generate power further efficiently, while realizing the space saving of the generator 100.

### (Modification)

In the above-described embodiment, although the case has been described where the generator 100 includes the first coil 22a and the second coil 22b, the number of coils included in the generator 100 is not limited to two. Additionally, bobbins may be provided according to the number of coils.

In the above-described embodiment, although the case has been described where the coil is wound around the bobbin, the generator may not include a bobbin. In this case, it is conceivable to use, for example, an air core coil made of self-fused wire as the coil, and to cause the housing to support the air core coil. Additionally, in this case, for example, a supporting portion may be provided in the housing or to the housing itself, and the first shaft and the second shaft may be rotatably supported with respect to the coil by the supporting portion.

In the above-described embodiment, although the case has been described where the ring-shaped magnet 28 magnetized into two poles in the circumference direction is used, the magnet may be configured to be able to generate a current in the coil 22, and the configuration of the magnet is not limited to the above-described example. For example, a columnar or spherical magnet may be used. In this case, an outer peripheral surface of the columnar or spherical magnet may be attached to an outer peripheral surface of the first shaft 24. Additionally, in the above-described embodiment, although the case has been described where one magnet is used, a plurality of magnets may be used.

Additionally, the configuration of the conversion unit 44 is not limited to the above-described example, and the conversion unit 44 may be configured to convert the linear motion of the operation member 40 in the first direction X1 into the first rotational motion, and convert the linear motion of the operation member 40 in the second direction X2 into the second rotational motion in the opposite direction to the first rotational motion. Additionally, the configuration of the transmission unit 46 is also not limited to the above-described example, and the transmission unit 46 may be configured to transmit the above-described first rotational motion converted by the conversion unit 44 to the second shaft 26, and block transmission of the above-described second rotational motion converted by the conversion unit 44 to the second shaft 26. Additionally, the configuration of the ratchet portion 46b of the transmission unit 46 is also not limited to the above-described example, and while the ratchet portion 46b may be configured to transmit the above-described first rotational motion transmitted to the driven gear 46a from the drive gear 44b to the second shaft 26, the ratchet portion 46b may be configured to block transmission of the above-described second rotational motion transmitted to the ratchet portion 46b from the drive gear 44b to the second shaft 26.

### INDUSTRIAL APPLICABILITY

According to the present invention, a generator capable of efficiently generating power in a space-saving manner can be obtained.

### REFERENCE SIGNS LIST

10 housing
12 container
14 lid portion
16 power generation unit
18 driving unit
20 bobbin
20a cylindrical portion
22 coil
22a first coil
22b second coil
24 first shaft
26 second shaft
28 magnet
30 first gear
32 second gear
34 magnetic metal member
36 first bobbin
38 second bobbin
40 operation member
42 biasing member
44 conversion unit
44a pinion gear
44b drive gear
46 transmission unit
46a driven gear
46b ratchet portion
54 rack gear
100 generator

## Claims

1. A generator comprising:
a coil wound in a cylindrical shape;
a first shaft and a second shaft that extend in a direction perpendicular to an axial direction of the coil so as to pass through inside of the coil, that are provided parallel to each other when viewed from the axial direction, and that are rotatable with respect to the coil,
a magnet and a first gear inside the coil that are provided in an outer periphery portion of the first shaft to be integrally rotated with the first shaft, and that are arranged to be aligned in a length direction of the first shaft,
a second gear inside the coil that has more teeth than the first gear, that is provided in an outer periphery portion of the second shaft to be integrally rotated with the second shaft, and that is engaged with the first gear, and
a driving unit that is provided outside the coil when viewed from the axial direction of the coil, and that rotationally drives the second shaft.

2. The generator according to claim 1,
wherein the second shaft is made of a non-magnetic material.

3. The generator according to claim 1 or 2, further comprising:
a housing that accommodates the coil, the first shaft, the second shaft, and the driving unit,
wherein the driving unit includes
an operation member that is provided such that a part thereof protrudes to outside of the housing, and the part is provided to be able to perform a reciprocating linear motion in a first direction along which the part is pushed into the housing, and a second direction along which the part is pushed to outside of the housing,
a biasing member that biases the operation member toward the second direction,
a conversion unit that converts a linear motion of the operation member in the first direction into a first rotational motion, and converts a linear motion of the operation member in the second direction into a second rotational motion in an opposite direction to the first rotational motion, and
a transmission unit that transmits the first rotational motion converted by the conversion unit to the second shaft, and blocks transmission of the second rotational motion converted by the conversion unit to the second shaft.

4. The generator according to claim 3,
wherein the operation member includes a rack gear,
the conversion unit includes a pinion gear that is engaged with the rack gear, and a drive gear that has more teeth than the pinion gear and is integrally rotated with the pinion gear,
the transmission unit includes a driven gear that is coaxially provided with the second shaft and is engaged with the drive gear, and a ratchet portion that connects the driven gear to the second shaft, and
the ratchet portion transmits the first rotational motion transmitted to the driven gear from the drive gear to the second shaft, and blocks transmission of the second rotational motion transmitted to the driven gear from the drive gear to the second shaft.

5. The generator according to any of claims 1 to 4, further comprising:
a bobbin including a hollow cylindrical portion,
wherein the coil is wound around an outer peripheral surface of the cylindrical portion,
the first shaft and the second shaft are provided to penetrate the cylindrical portion when viewed from the axial direction of the coil, and
the magnet, the first gear, and the second gear are provided inside the cylindrical portion.

6. The generator according to claim 5,
wherein the coil includes a first coil and a second coil that are arranged to be aligned in an axial direction of the cylindrical portion,
the bobbin includes a first bobbin around which the first coil is wound, and a second bobbin around which the second coil is wound,
the first shaft and the second shaft are provided to be sandwiched by the first bobbin and the second bobbin, and
the magnet is formed into a ring shape so that the first shaft passes through a center portion thereof, and an outer periphery portion thereof is magnetized into two poles in a circumference direction.

7. The generator according to claim 5 or 6, further comprising:
a magnetic metal member fixed to an end portion of the bobbin in the axial direction of the cylindrical portion.

8. The generator according to any of claims 1 to 7,
wherein a part of the magnet is overlapped with a part of the second gear when viewed from a length direction of the second shaft.
